(19) Europäisches Patentamt
European Patent Office
Office européen des brevets

(11) EP 1 295 007 B1

(12) FASCICULE DE BREVET EUROPEEN

(45) Date de publication et mention de la délivrance du brevet:
**30.05.2007 Bulletin 2007/22**

(51) Int Cl.:
*E21B 17/042* (2006.01)   *F16L 15/00* (2006.01)

(21) Numéro de dépôt: **01947514.4**

(22) Date de dépôt: **18.06.2001**

(86) Numéro de dépôt international:
**PCT/FR2001/001897**

(87) Numéro de publication internationale:
**WO 2001/098620 (27.12.2001 Gazette 2001/52)**

(54) **JOINT FILETE TUBULAIRE AVEC BUTEE RENFORCEE**

GEWINDEVERBINDIUNG MIT VERSTÄRKTEM ANSCHLAG

TUBULAR THREADED JOINT WITH REINFORCED STOP

(84) Etats contractants désignés:
**AT BE CH CY DE DK ES FI FR GB GR IE IT LI LU MC NL PT SE TR**
Etats d'extension désignés:
**RO**

(30) Priorité: **20.06.2000 JP 2000185020**
**22.12.2000 FR 0016866**

(43) Date de publication de la demande:
**26.03.2003 Bulletin 2003/13**

(73) Titulaires:
• **VALLOUREC MANNESMANN OIL & GAS FRANCE**
**59620 Aulnoye-Aymeries (FR)**
• **SUMITOMO METAL INDUSTRIES, LTD.**
**Osaka-shi,**
**Osaka 541-0041 (JP)**

(72) Inventeurs:
• **SCHES, Céline**
**F-59300 Famars (FR)**
• **SUGINO, Masaaki**
**Amagasaki-shi**
**Hyogo 661-0012 (JP)**
• **VARENNE, Emmanuel**
**F-69400 Villefranche-sur-Saône (FR)**
• **YAMAMOTO, Miyuki**
**Izumiotsu-shi**
**Osaka 595-0055 (JP)**

(74) Mandataire: **Pellicani, Félix Angelo et al**
**Vallourec & Mannesmann Tubes**
**Division Propriété Industrielle**
**130 rue de Silly**
**92100 Boulogne-Billancourt (FR)**

(56) Documents cités:
EP-A- 0 488 912          EP-A- 0 916 883
WO-A-00/14441          WO-A-94/29627
FR-A- 1 488 719          FR-A- 1 489 013

EP 1 295 007 B1

**Description**

L'invention concerne les joints filetés tubulaires composés d'un élément fileté mâle disposé en extrémité d'un premier composant tubulaire et assemblé par vissage à un élément fileté femelle disposé en extrémité d'un second composant tubulaire.

De tels joints sont notamment utilisés pour constituer des colonnes de tubes de cuvelage ou de production ou des trains de tiges de forage pour des puits d'hydrocarbures ou pour la géothermie.

Les éléments filetés mâles et femelles peuvent être disposés chacun à une extrémité de tubes de grande longueur, l'élément fileté mâle d'un premier tube étant vissé dans l'élément fileté femelle d'un autre tube pour constituer un joint fileté dit intégral.

Alternativement, les éléments filetés mâles peuvent être disposés à chacune des deux extrémités de tubes de grande longueur, ceux-ci étant assemblés par un tube de courte longueur ou manchon sur les extrémités duquel sont réalisés deux éléments filetés femelles : un tel assemblage entre 2 tubes de grande longueur est dit « fileté manchonné » et met en oeuvre deux joints filetés tubulaires.

L'invention concerne plus particulièrement les joints filetés dits supérieurs (ou encore "premium") qui comportent des surfaces ou portées d'étanchéité métal-métal interférant radialement et associées à des surfaces de butée destinées notamment à positionner précisément lesdites surfaces d'étanchéité.

De tels joints filetés supérieurs sont par exemple décrits dans le brevet EP 488 912, et permettent d'assurer une étanchéité aux fluides des joints filetés dans différentes configurations d'utilisation (traction axiale ou compression axiale, pression interne ou externe, flexion...).

Des techniques récentes de forage de puits déviés en oblique voire horizontalement nécessitent de faire tourner les tubes et les joints filetés qui les assemblent lors de leur descente dans le puits.

De telles techniques nécessitent de visser les joints filetés sous des couples de vissages élevés, en tout cas nettement plus élevés que le couple de torsion mis en oeuvre lors de la descente dans le puits faute de quoi le positionnement des surfaces d'étanchéité pourrait être modifié et le joint fileté pourrait fuir.

Du fait des niveaux de couple envisagés, ainsi que des efforts de flexion dans les parties mises en flexion par la géométrie du puits (puits déviés), les surfaces de butée sont soumises à des efforts importants.

Dans le cas plus particulièrement de colonnes de tubes de cuvelage ou de production, un puits est équipé de plusieurs colonnes concentriques de tubes et les diamètres intérieurs et extérieurs des constituants des colonnes sont forcément limités pour admettre un nombre maximal de colonnes dans un puits.

Les surfaces de butée qui sont des surfaces d'orientation sensiblement perpendiculaires à l'axe sur les éléments filetés sont donc d'épaisseur radiale limitée et sont soumises dans le cas de tels joints filetés à des contraintes très élevées pouvant conduire à une plastification inacceptable.

On connaît par les documents WO 94/29627 et WO 00/14441 des joints filetés tubulaires permettant un vissage sous un couple très élevé, qui font jouer partiellement ou totalement un rôle de butée aux flancs des filets.

On a cherché dans la présente invention à réaliser un joint fileté tubulaire supérieur présentant un couple de surfaces de butée mâle et femelle particulièrement résistantes à la plastification sans chercher à faire jouer un rôle de butée aux flancs des filets.

On a cherché à ce que l'invention puisse s'appliquer à des joints filetés tubulaires supérieurs à une ou plusieurs butées pour chaque élément fileté mais dans lesquels la butée principale (qui est mise la première en butée et est la plus sollicitée) est réalisée sur l'élément fileté mâle à son extrémité frontale libre et de manière correspondante sur l'élément fileté femelle.

On a aussi cherché à ce que l'invention puisse s'appliquer quel que soit le type de filetage, de forme de filet ou de forme de surface d'étanchéité.

Le joint fileté tubulaire selon l'invention comprend un élément fileté mâle en extrémité d'un premier composant tubulaire et un élément fileté femelle en extrémité d'un second composant tubulaire.

L'élément fileté mâle comporte un filetage mâle et se termine par une lèvre mâle.

La lèvre mâle comprend :

- une surface périphérique extérieure sur laquelle est réalisée une portée d'étanchéité mâle,
- une surface annulaire de butée mâle, d'orientation sensiblement transversale, voisine et reliée à la portée d'étanchéité mâle et constituée par la surface frontale d'extrémité libre de l'élément fileté mâle,
- une surface périphérique intérieure.

Par surface d'orientation sensiblement transversale, on entend des surfaces aussi bien planes que non planes, par exemple coniques, dont la génératrice ne s'éloigne pas de plus de 30° par rapport à un plan normal à l'axe du joint fileté.

L'élément fileté femelle comprend pour coopérer avec les moyens correspondants de l'élément fileté mâle un filetage femelle, une surface périphérique intérieure sur laquelle est réalisée une portée d'étanchéité femelle et un épaulement femelle.

L'épaulement femelle possède une surface annulaire de butée femelle d'orientation sensiblement transversale, voisine et reliée à ladite portée d'étanchéité femelle et définit une zone annulaire d'épaulement femelle qui est soumise aux efforts axiaux de compression résultant de l'appui de ladite surface de butée mâle contre ladite surface de butée femelle.

Le filetage mâle est vissé dans le filetage femelle jusqu'à ce que ladite surface de butée mâle porte contre ladite surface de butée femelle, ladite portée d'étanchéité mâle interférant alors radialement avec ladite portée d'étanchéité femelle.

Selon une caractéristique propre à l'invention, la zone annulaire d'épaulement femelle possède une surface périphérique intérieure dont le diamètre intérieur est au moins localement à proximité de ladite surface de butée femelle plus faible que le diamètre de la surface périphérique intérieure de la lèvre mâle, le rapport R de ces deux diamètres étant inférieur à 1 mais supérieur ou égal à 0,9.

Une telle caractéristique permet de diminuer la contrainte équivalente de Von Mises dans la zone annulaire d'épaulement femelle qui est supérieure sur de nombreux joints filetés de l'état de la technique à celle dans la butée mâle à cause, selon les inventeurs, de la triaxialité des contraintes créées par les portées d'étanchéité voisines : les contraintes principales dans la butée mâle sont en effet toutes de compression alors que dans la zone annulaire d'épaulement femelle, seule la contrainte axiale est une contrainte de compression, les deux autres contraintes principales étant des contraintes de traction.

Cette caractéristique permet aussi de conserver un diamètre suffisant de passage intérieur dans le joint fileté tubulaire.

On connaît les brevets FR 1 488 719 et FR 1 489 013 qui montrent sur certaines de leurs figures un joint fileté tubulaire avec butées et portées d'étanchéité et possédant une lèvre mâle en extrémité de l'élément fileté mâle et un épaulement femelle sur l'élément fileté femelle, le diamètre intérieur de la surface périphérique intérieure de la zone annulaire d'épaulement femelle étant localement à proximité de ladite surface de butée femelle plus faible que le diamètre de la surface périphérique intérieure de la lèvre mâle.

Aucune limite de valeur n'est donnée dans ces deux documents pour le rapport de ces diamètres.

En outre dans le cas du brevet FR 1 489 013, aucune fonction n'est associée à la différence de diamètre intérieur ; on peut seulement supposer que le diamètre plus faible de la surface périphérique intérieure de la zone annulaire d'épaulement femelle résulte du rengraissement par forgeage de l'épaisseur du tube pour constituer l'élément fileté femelle.

Dans le cas du brevet FR 1 488 719 qui concerne les joints filetés pour tubes de cuvelage, la zone annulaire d'épaulement femelle possède un diamètre intérieur plus faible que la lèvre mâle pour éviter la détérioration des lèvres mâles et par conséquent de l'étanchéité du joint fileté par des chocs lors de la descente de tiges de forage dans la colonne de tubes de cuvelage. La fonction de la différence de diamètre intérieur est donc tout autre que dans le cas de la présente invention.

Préférentiellement, le rapport R obéit à la relation

$$\sqrt{1,7 - 0,7S^2} \leq R \leq \sqrt{1,2 - 0,2S^2}$$, dans laquelle S est égal au rapport entre diamètre du bord extérieur de ladite surface de butée mâle et diamètre intérieur de la lèvre mâle.

Cette caractéristique tend à minimiser les écarts de contrainte équivalente entre butée mâle et zone annulaire d'épaulement femelle et par là à optimiser la géométrie du joint fileté selon l'invention.

Avantageusement, la surface périphérique intérieure de l'épaulement femelle du joint fileté tubulaire selon l'invention possède un diamètre minimal en un point où cette surface périphérique intérieure intercepte une surface conique dite de cisaillement maximal qui est définie de la manière suivante :

- c'est une surface conique de demi-angle au sommet 45° coaxiale à l'élément fileté femelle,
- dont le diamètre va en diminuant dans la zone annulaire d'épaulement femelle au fur et à mesure que l'on s'éloigne de ladite surface de butée femelle et,
- qui passe par le bord extérieur de ladite surface de butée femelle.

Avantageusement aussi, le diamètre de la surface périphérique intérieure de l'épaulement femelle à son extrémité du côté de ladite surface de butée femelle est égal au diamètre intérieur de la surface périphérique intérieure de la lèvre mâle.

Préférentiellement, la surface périphérique intérieure de l'épaulement femelle présente une première partie dite de transition dont le diamètre intérieur diminue progressivement depuis ladite surface de butée femelle puis une seconde partie cylindrique de diamètre intérieur minimal.

On peut définir un point de raccord entre la partie de transition et la partie cylindrique de la surface périphérique intérieure de l'épaulement femelle.

Préférentiellement aussi, ce point de raccord est situé sensiblement à mi-distance axiale entre d'une part l'extrémité de ladite partie de transition du côté de ladite surface de butée femelle et d'autre part le point d'intersection de la surface périphérique intérieure de l'épaulement femelle avec la surface conique de cisaillement maximal.

D'autres avantages et caractéristiques de l'invention apparaîtront dans la description détaillée ci-après et les dessins annexés.

La figure 1 représente un assemblage fileté manchonné de l'état de la technique.

La figure 2 représente un détail d'un joint fileté de l'assemblage de la figure 1 au niveau des butées mâle et femelle.

La figure 3 représente un détail d'un joint fileté selon l'invention.

La figure 4 représente un détail à plus fort grossissement de la figure 3.

La figure 5 représente une variante de la figure 4.

La figure 6 représente un diagramme d'essai de survissage donnant le couple de vissage en fonction du nombre de tours jusqu'à plastification des butées.

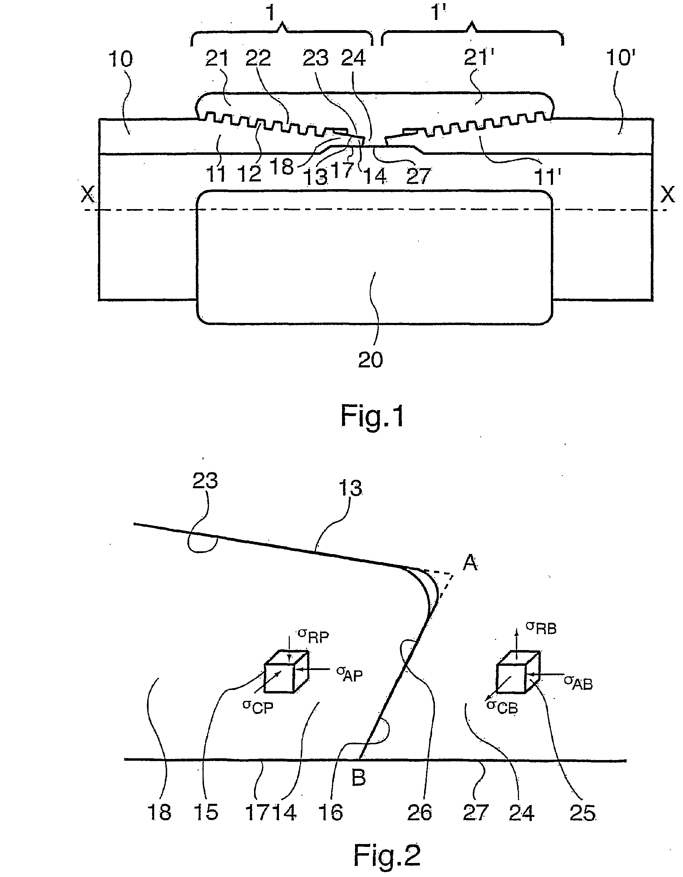

Les figures 1 et 2 représentent un assemblage fileté manchonné de l'art antérieur entre deux tubes en acier de grande longueur 10 et 10'.

A chaque extrémité des tubes 10, 10', on a réalisé un élément fileté mâle tel que 11, 11'. L'élément mâle tel que 11 comporte un filetage conique mâle 12 et se termine du côté de son extrémité libre par une lèvre mâle 18.

Cette lèvre mâle 18 comprend :

- une surface périphérique extérieure sur laquelle est réalisée une portée d'étanchéité mâle 13, conique, inclinée par exemple à 20° par rapport à l'axe XX de l'élément mâle;
- une surface annulaire 16 de butée mâle d'orientation sensiblement transversale constituée par la surface frontale d'extrémité libre de l'élément fileté mâle. La surface de butée mâle 16 est adjacente à la portée d'étanchéité mâle 13, en étant raccordée à cette dernière par une surface torique de faible rayon de l'ordre du millimètre pour éviter de rendre fragile ce raccordement. La butée mâle 14 dans l'exemple présenté est une butée dite inverse ou à angle négatif dont la surface de butée 16 est une surface conique concave de demi-angle au sommet 75° qui fait par conséquent un angle de 15° par rapport à la normale à l'axe XX ;
- une surface périphérique intérieure 17 de diamètre intérieur $ID_P$ obtenue par usinage de manière à faire coïncider l'axe de cette surface 17 avec celui de l'élément fileté mâle quelles que soient les variations d'épaisseur des tubes 10. Cette surface 17 est raccordée d'une part à la surface périphérique intérieure courante du tube 10 et d'autre part en B à la surface de butée mâle 16.

L'assemblage des tubes 10, 10' est réalisé par un manchon 20 comportant deux éléments filetés femelles 21, 21' disposés de manière symétrique sur le manchon 20 à chacune des extrémités de celui-ci.

Les éléments filetés femelles 21, 21' comportent des moyens disposés de manière à coopérer avec les moyens correspondants des éléments filetés mâles 11, 11' pour constituer deux joints filetés tubulaires 1 et 1'.

Vue la symétrie de l'assemblage, on se bornera à décrire le seul joint fileté 1.

L'élément fileté femelle 21 comporte un filetage femelle 22 correspondant au filetage mâle 12, une surface périphérique intérieure comprenant une portée d'étanchéité femelle 23 conique et un épaulement femelle muni d'une surface annulaire 26 de butée femelle, d'orientation sensiblement transversale et formée par une surface conique convexe de demi-angle au sommet 75°.

La surface de butée femelle 26 est adjacente à la portée d'étanchéité femelle 23 en étant raccordée à celle-ci par une surface torique de faible rayon pour éviter comme pour l'élément fileté mâle une fragilité de ce raccordement.

Le point A caractérise le bord extérieur de la surface de butée femelle 26 et donc la racine de l'épaulement femelle du côté portée d'étanchéité femelle 23. Il se confond avec le bord extérieur de la surface de la butée mâle 16.

En position assemblée du joint fileté, le filetage mâle 12 est vissé dans le filetage femelle 22 jusqu'à ce que la butée mâle 14 soit en butée sous pression de contact avec la butée femelle 24.

La disposition quasi transversale des surfaces de butée 16, 26 permet de positionner l'élément fileté mâle 11 par rapport à l'élément fileté femelle 21, cette position relative étant définie très précisément par le niveau du couple de vissage.

En position assemblée du joint fileté, la portée d'étanchéité mâle 13 interfère radialement avec la portée d'étanchéité femelle 23, ce qui signifie que, pour des sections droites correspondantes des portées d'étanchéité mâle et femelle, le diamètre de portée mâle est avant vissage légèrement supérieur au diamètre de portée femelle.

Une telle interférence radiale génère une pression de contact élevée entre les portées d'étanchéité 13, 23. Cette pression de contact permet de rendre le joint fileté étanche aux fluides intérieurs ou extérieurs malgré des sollicitations diverses (pression intérieure ou extérieure, traction, compression, torsion, flexion, avec ou sans variation cyclique de température...) simples ou combinées.

Un niveau élevé de couple de vissage est souhaitable pour éviter toute rotation de l'élément fileté mâle 11 par rapport à l'élément fileté femelle 21, notamment si l'on est amené à mettre en rotation la colonne de tubes lors de sa descente dans le puits.

Ce couple de vissage se traduit par une mise en compression axiale du métal des butées 14, 24, et ne doit pas conduire à la plastification de ces dernières.

En outre, dans le cas de forages déviés, les contraintes de flexion induisent des surcroîts d'effort de compression axiale sur les butées.

Il peut en être également de même si la colonne de tubes est soumise à des efforts de compression axiale et/ou à des cycles thermiques.

Généralement sur les joints filetés de l'art antérieur et comme il apparaît sur les figures 1 et 2, l'épaulement femelle présente à son sommet une surface périphérique intérieure 27 cylindrique et de même diamètre intérieur que la surface périphérique intérieure mâle 17 de la lèvre mate 18.

Ceci permet d'éviter :

- des turbulences dans le fluide circulant intérieurement, notamment à la jonction entre l'élément fileté mâle 11 et l'élément fileté femelle 21, turbulences génératrices de phénomène d'érosion-corrosion et ;
- un blocage ou une détérioration à ce niveau des outils ou des appareillages descendus en service dans la colonne de tubes.

Les inventeurs désignés dans le présent document ont constaté avec surprise lors d'essais de survissage que, sur les joints filetés selon les figures 1 et 2, le métal de la zone annulaire d'épaulement femelle 24 était toujours plastifié avant celui de la butée mâle 14.

L'explication qu'ils ont trouvée fait intervenir l'influence de la présence de la portée d'étanchéité adjacente aux butées sur la triaxialité des contraintes comme illustré à la figure 2.

Si l'on considère un cube élémentaire de métal 15 de la butée mâle 14, ce cube 15 est soumis à un ensemble de contraintes qui peuvent être réduites à trois contraintes principales $\sigma_{AP}$, $\sigma_{RP}$ et $\sigma_{CP}$, respectivement dans les directions axiale, radiale et circonférencielle.

La contrainte axiale $\sigma_{AP}$ provient essentiellement du couple de vissage et est une contrainte de compression (signe négatif).

La contrainte radiale $\sigma_{RP}$ résulte principalement de l'interférence radiale entre portées d'étanchéité 13, 23 et est une contrainte également de compression. L'angle négatif des surfaces 16, 26 de butées inverses tend à renforcer l'effet de l'interférence radiale des portées d'étanchéité sur la contrainte radiale $\sigma_{RP}$.

La contrainte circonférencielle $\sigma_{CP}$ résulte aussi principalement de l'interférence radiale entre portées d'étanchéité 13, 23 qui tend à restreindre le diamètre de lèvre mâle de sorte que la contrainte circonférencielle $\sigma_{CP}$ est encore une contrainte de compression, dont l'intensité est également renforcée par la disposition inverse des butées 14, 24.

Si on considère un cube élémentaire de métal 25 dans la zone annulaire 24 de l'épaulement femelle, ce cube 25 est soumis à un ensemble de trois contraintes principales telles que :

- la contrainte axiale $\sigma_{AB}$ est également une contrainte de compression (valeur négative) ;
- la contrainte radiale $\sigma_{RB}$ résultant principalement de l'influence de l'interférence radiale sur la portée d'étanchéité femelle 23 (et accessoirement de la surface de butée inverse 26) est une contrainte de traction (valeur positive) ;
- la contrainte circonférencielle $\sigma_{CB}$ résultant également de l'interférence radiale sur la portée d'étanchéité femelle 23 et de la surface de butée inverse 26 est également une contrainte de traction (valeur positive).

Or, selon les théories connues de la plasticité des matériaux, la déformation plastique débute lorsqu'une contrainte équivalente, telle que celle de Von Mises qui est fonction des différences algébriques des contraintes principales prises deux à deux, est supérieure à la limite d'élasticité du matériau.

La contrainte équivalente de Von Mises est relativement faible pour le cube élémentaire 15 dans la butée mâle 14 puisque les 3 contraintes principales $\sigma_{AP}$, $\sigma_{RP}$ et $\sigma_{CP}$, sont de même signe ; elles sont au contraire relativement élevées pour le cube élémentaire 25 dans la zone annulaire d'épaulement femelle 24 puisque deux des contraintes principales ($\sigma_{RB}$, $\sigma_{CB}$) sont positives (traction) tandis que la troisième ($\sigma_{AB}$) est négative (compression).

Il s'ensuit qu'en survissant le joint fileté, la contrainte équivalente dans le cube élémentaire 25 de l'épaulement femelle sera plus vite susceptible de dépasser la limite d'élasticité du matériau que la contrainte équivalente d'un cube élémentaire 15 de la butée mâle 14.

Les inventeurs désignés dans la présente demande en ont conclu qu'il serait avantageux, soit d'augmenter localement la limite d'élasticité du métal dans la zone annulaire d'épaulement femelle 24, par exemple par trempe par induction ou par grenaillage de précontrainte, soit de diminuer la contrainte équivalente au niveau de la zone annulaire d'épaulement femelle 24 soumise à compression axiale en augmentant la surface sur laquelle ces contraintes s'exercent.

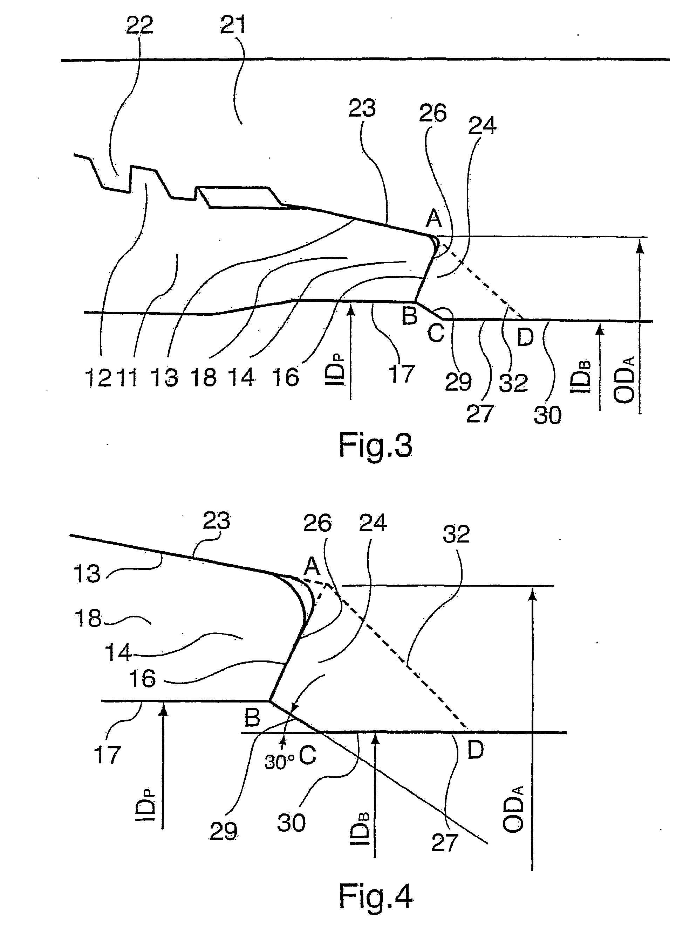

Compte tenu des difficultés pour effectuer un traitement thermique ou mécanique efficace à l'intérieur d'un manchon, les inventeurs ont plutôt choisi de rengraisser la section de l'épaulement femelle comme illustré par les figures 3, 4 ou 5.

Les figures 3 et 4 diffèrent de la figure 2 en ce que la zone annulaire 24 de l'épaulement femelle présente un rengraissement du côté intérieur de sorte que le diamètre intérieur minimal $ID_B$ de sa surface périphérique intérieure 27 est localement inférieur au diamètre intérieur $ID_P$ de la surface périphérique intérieure 17 de la lèvre mâle 18.

La surface périphérique intérieure 27 de l'épaulement femelle est une surface cylindro-conique avec une première partie conique 29 dite « de transition » du côté surface de butée femelle 26 et une seconde partie cylindrique 30 de diamètre $ID_B$.

La surface conique 29 est coaxiale à l'élément fileté femelle, son demi-angle au sommet θ est égal à 30° et son diamètre va en diminuant lorsqu'on s'éloigne de la surface 26 de butée femelle. Le diamètre intérieur de la surface conique 29 à son extrémité B du côté de la surface 26 de butée femelle est égal au diamètre intérieur $ID_P$ de la surface périphérique intérieure 17 de la lèvre mâle de sorte que l'on passe de l'élément fileté mâle 11 à l'élément fileté femelle 21 sans variation de diamètre intérieur.

L'angle θ est inférieur à 45° pour limiter les risques de turbulence de l'écoulement du fluide circulant intérieurement et les risques d'accrochage d'un outil descendu dans la colonne de tubes. On verra plus loin pourquoi il est utile de fixer une limite inférieure pour l'angle θ.

La surface conique 29 réalise ainsi un raccordement progressif entre la surface périphérique intérieure 17 de la lèvre mâle et la partie cylindrique 30 de la surface périphérique intérieure 27 de l'épaulement femelle.

Le diamètre $ID_B$ de la partie cylindrique 30 de la surface périphérique intérieure 27 de l'épaulement femelle est, bien sûr, inférieur à la valeur $ID_P$, sinon il n'y aurait pas de renforcement de la butée femelle 24.

Le diamètre $ID_B$ est supérieur ou égal à $0,9.ID_P$ pour conserver une section de passage suffisante à l'intérieur de la colonne. Un diamètre $ID_B$ inférieur à $0,9.ID_P$ ne permettrait en effet d'insérer qu'un faible nombre de colonnes de tubes les unes dans les autres et une telle conception de colonne serait alors extrêmement coûteuse.

Sachant qu'il est inutile de rengraisser la zone annulaire 24 d'épaulement femelle en deçà d'un diamètre $ID_B$ pour lequel la butée femelle 24 est aussi résistante que la butée mâle 14, les inventeurs ont trouvé que le rapport R entre $ID_B$ et $ID_P$ devait être compris entre les bornes $\sqrt{1,7 - 0,7S^2}$ et $\sqrt{1,2 - 0,2S^2}$ et devrait préférentiellement être égal à $\sqrt{1,3 - 0,3S^2}$, S étant égal au rapport $OD_A/ID_P$ et $OD_A$ étant le diamètre du bord extérieur de la surface de butée mâle 16 ; ce diamètre est ici égal au diamètre passant par le point A situé à la racine de l'épaulement femelle 24.

Des valeurs R de l'ordre de 0,95 à 0,98 sont alors obtenues compte tenu des valeurs courantes de $ID_P$ et $OD_A$.

Avantageusement le diamètre $ID_B$ est supérieur au diamètre dit de « drift» spécifié par l'API ou par les fabricants de joints filetés tubulaires pour des tubes de dimension donnée, le contrôle de drift consistant à déplacer un mandrin de diamètre donné dans les tubes assemblés pour s'assurer que la colonne de tubes permet de descendre des outils jusqu'à un diamètre donné de ces derniers sans risque de blocage de ces outils. Le diamètre intérieur des tubes 10, 10', notamment de leur partie courante, doit être de ce fait supérieur au diamètre de drift.

Les inventeurs ont en outre trouvé que conformément à la figure 3, il n'est pas utile que le rengraissement de l'épaulement affecte toute la longueur axiale de surface périphérique intérieure 27.

Ils ont en effet constaté que la zone la plus déformée de la zone annulaire d'épaulement femelle 24 est la surface conique 32 coaxiale à l'élément fileté femelle, passant par le point A à la racine de l'épaulement femelle du côté portée femelle 23, de demi-angle au sommet égal à 45° environ et de diamètre diminuant dans la zone annulaire d'épaulement femelle 24 au fur et à mesure que l'on s'éloigne de la surface de butée 26.

Les déformations suivant cette surface conique sont des cisaillements et les inventeurs ont trouvé que ces contraintes de cisaillement pouvaient être minimisées en réalisant un diamètre intérieur $ID_B$ minimal à l'intersection en D entre cette surface conique 32 dite de cisaillement maximal et la surface périphérique intérieure 27 de l'épaulement femelle.

On comprend ainsi que, si l'angle θ de la surface conique 29 est inférieur à 15°, il est possible que le cône de cisaillement maximal 32 intercepte la surface périphérique intérieure 27 dans la partie conique 29 où le diamètre n'est pas le diamètre intérieur minimal $ID_B$ avec pour conséquence que la partie cylindrique 30 de diamètre $ID_B$ est alors inutilement rengraissée. De ce point de vue un angle θ de l'ordre de 30° voire supérieur est même préféré.

Il est ainsi avantageux que le point C de raccord entre les surfaces 29 et 30 soit situé sensiblement à mi-distance axiale entre les points B et D.

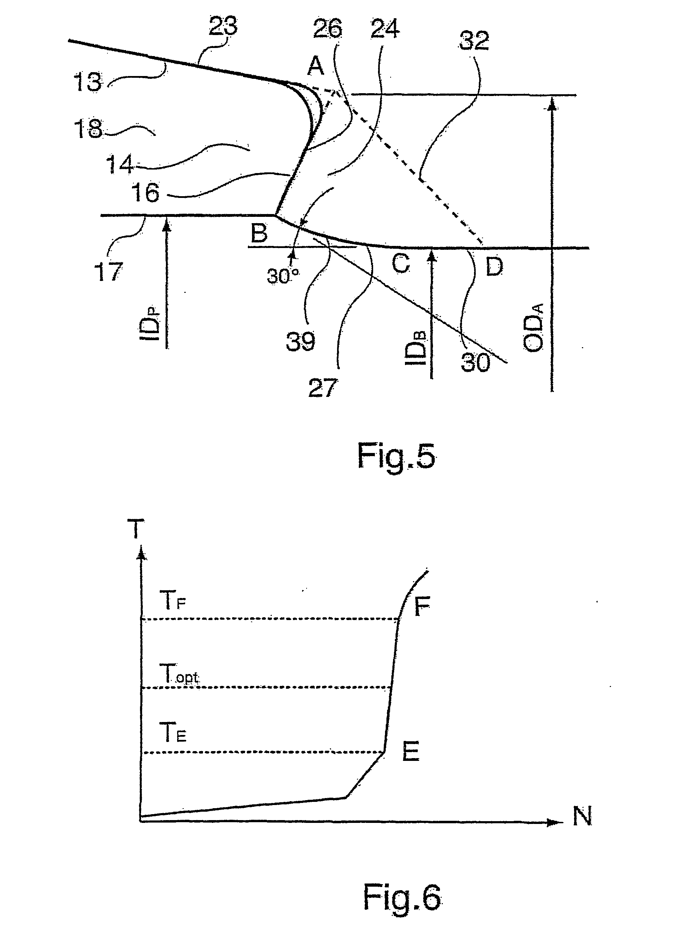

La figure 5 montre une variante de la figure 4 dans laquelle la partie de transition n'est pas une surface conique mais une surface torique 39 coaxiale à l'élément fileté femelle.

Cette surface torique 39 apparaît en coupe longitudinale selon la figure 5 comme un arc de cercle :

- de rayon 10 mm environ ;
- dont le centre est dirigé vers la matière de l'élément fileté femelle ;
- passant par le point B de raccordement avec la surface périphérique intérieure 17 de lèvre mâle ;
- dont la tangente en B fait un angle de 30° avec l'axe XX des éléments filetés donc aussi avec la génératrice de la surface périphérique intérieure 17 ;
- tangent en C à la partie cylindrique 30 de la surface périphérique intérieure 27 de l'épaulement femelle.

Une telle surface torique réalise aussi un raccordement progressif entre surface périphérique intérieure 17 et partie cylindrique 30 de diamètre intérieur $ID_B$ pour que l'angle de sa tangente en B avec l'axe XX soit compris entre 15 et 45 °.

D'autres formes progressives de partie de transition de surface périphérique intérieure 27 de l'épaulement femelle sont possibles, par exemple un ensemble de deux surfaces toriques adjacentes et tangentes entre elles, de courbures opposées et tangentes, l'une à la surface périphérique intérieure 17 en B et l'autre à la surface cylindrique 30 en C.

Sans sortir de la portée de la présente invention, les portées d'étanchéité peuvent ne pas être immédiatement adjacentes aux surfaces de butée 16, 26 : d'ailleurs les figures 2 à 5 montrent des surfaces toriques de raccordement de faible rayon entre portées d'étanchéité 13, 23 et surfaces de butée correspondantes 16, 26. D'autres types de surfaces peuvent assurer ce raccordement sans sortir de la portée de la présente invention du moment que l'interférence radiale au niveau des portées d'étanchéité induit des contraintes radiales et circonférencielles de traction dans la zone annulaire d'épaulement femelle.

La présente invention trouve à s'appliquer dans de nombreuses configurations de joints filetés, parmi lesquelles :

- des assemblages filetés intégraux ou manchonnés;
- des joints filetés pour tubes de faible ou gros diamètre (tubes de production ou de cuvelage par exemple);
- des joints à paire extérieure de butées (la butée femelle est en extrémité libre de l'élément fileté femelle) ou à plusieurs jeux de butées ;
- des joints filetés avec des portées d'étanchéité aussi bien coniques que non coniques, par exemple toriques sur les deux éléments filetés ou encore torique sur un élément fileté et conique sur l'élément opposé ;
- des joints filetés avec des surfaces de butées droites (planes) ou d'angle négatif ; dans le cas de butées dites inverses ou d'angle négatif, il est toutefois préférable dans ce dernier cas que la mesure de l'angle des butées par rapport à la normale à l'axe XX des éléments filetés soit inférieure ou égale à 20° et soit de préférence comprise entre 5 et 10° ;
- des joints filetés avec des filetages coniques ou cylindriques, à simple ou à plusieurs étages ;
- des joints filetés avec des filets de formes diverses tels que, par exemple, des filets triangulaires, ronds ou trapézoïdaux ;
- des joints filetés avec des filets à largeur variable.

<u>Exemples de réalisation</u>

<u>1er exemple</u>

On a effectué des essais de vissage-dévissage sur 2 séries de joints filetés du type VAM TOP® selon catalogue VAM ® n° 940 édité en juillet 1994 par Vallourec Oil & Gas.

- diamètre extérieur des tubes : 177,8 mm (7")
- épaisseur des tubes : 10,36 mm (29lb/ft)
- diamètre extérieur en extrémité mâle ($OD_A$) : 170,8 mm
- diamètre intérieur de lèvre mâle ($ID_P$): 161, 3 mm
- diamètre de drift 153,90 mm (6,059")
- grade des tubes type API L80 (limite d'élasticité supérieure ou égale à 552 MPa).

La série P standard est en accord avec la figure 2 et possède un diamètre intérieur femelle $ID_B$ de la zone d'épaulement femelle égal au diamètre intérieur mâle $ID_P$.

La série Q a été modifiée selon l'invention et correspond au schéma de la figure 5 : le renforcement de la butée femelle sur cette série Q se traduit par un diamètre $ID_B$ de la partie cylindrique 30 égal à 156,2 mm qui est supérieur au diamètre de drift; la partie cylindrique 30 est précédée par une partie torique 39 de rayon 10 mm de sorte que le point D d'intersection du cône 32 de cisaillement maximal avec la surface périphérique intérieure femelle 27 se fait au niveau de la partie cylindrique 30 de diamètre $ID_B$.

Le rapport R = $ID_B$/ $ID_P$ est égal à 0,97 pour la série Q et est bien compris à l'intérieur de l'intervalle (0,96-0,99) défini par la revendication 3 compte tenu de la valeur de $OD_A$.

Durant ces essais de vissage-dévissage, on a enregistré le couple de vissage en fonction du nombre de tours de vissage, en montant le niveau de couple maximal progressivement à chaque essai de vissage d'un cycle relatif à une même série jusqu'à obtenir la plastification des butées.

Dans tous ces essais de vissage-dévissage, les filetages, les portées d'étanchéité et les surfaces de butée ont été préalablement enduits de graisse type API 5A2.

La figure 6 montre la courbe du couple de vissage T en fonction du nombre de tours N pour le dernier essai de vissage d'un joint fileté de la série Q.

Sur ce diagramme, le couple monte brutalement quasiment à la verticale au-delà du point E (couple $T_E$) qui traduit l'accostage des butées. Cette brusque montée s'effectue de manière sensiblement linéaire jusqu'au point F (couple $T_F$).

Au-delà du point F (partie non linéaire de la courbe) débute l'enfoncement plastique d'au moins une des butées.

La valeur $T_{opt}$ correspond à la valeur recommandée du couple de vissage ; cette valeur se situe entre les valeurs $T_E$ et $T_F$.

Tableau 1 : Résultats de couple de vissage

| Couple | Série P (N.m) | Série Q (N.m) |
|---|---|---|
| $T_E$ | 3300 | 8100 |
| $T_{opt}$ | 12740 | |
| $T_F$ | 21200 | 36600 |
| $T_F$-$T_E$ | 17900 | 28500 |

On constate à partir des valeurs issues du tableau 1 que la quantité ($T_F$-$T_E$) qui mesure la partie du couple de vissage encaissée par les butées est considérablement augmentée (+ 60%) dans le cas des joints filetés selon l'invention de la série Q par rapport aux joints filetés P de l'état de la technique.

2ème exemple

Essais sur deux dimensions A et B de joints filetés de type VAM® ACE en grade L80 selon le catalogue VAM® désigné dans le 1er exemple.

Les caractéristiques des échantillons testés figurent au tableau 2.

Tableau 2 :Echantillons testés

| Echantillon | | Type | |
|---|---|---|---|
| | | A | B |
| Corps du tube | Diam. extérieur | 244,48 mm (9"5/8) | 88,90 mm (3 1/2) |
| | Epaisseur | 13,84 mm (53,5lb/ft) | 6,45 mm (9,2lb/ft) |
| | Longueur | 800 mm | 800 mm |
| Lèvre mâle | Diamètre intérieur ($ID_P$) | 220,09 mm | 77,96 mm |
| | Diamètre extérieur d'extrémité ($OD_A$) | 235,37 | 83,88 |
| Manchon | Diamètre extérieur | 266,24 mm | 98,80 mm |
| | Diamètre intérieur $ID_B$ | 219,79 mm | 77,66 mm |
| | Longueur | 340 mm | 215 mm |
| Diamètre de drift | | 212,83 mm (8,379") | 72,82 mm (2,867") |
| Matériau | | Tube sans soudure en acier au carbone de limite d'élasticité ≥ 552 Mpa | |

(suite)

| Echantillon | Type | |
|---|---|---|
| | A | B |
| Couple de vissage recommandé ($T_{opt}$) (*) | 21575 N.m | 3825 N.m |
| (*) avec graisse type API 5A2 | | |

Le tableau 3 regroupe les mesures de diamètre intérieur avant et après vissage sous le couple $T_{opt}$.

On vérifie que le diamètre intérieur $ID_B$ est toujours supérieur au diamètre de drift (voir tableau 2) tant pour les joints filetés standards (A3, B3) que pour ceux modifiés selon l'invention (A1, A2, B1, B2).

Tableau 3 : Résultats des mesures de diamètre intérieur

| Echantillon No. | Diamètre intérieur mâle $ID_P$ (mm) | | Diamètre intérieur femelle $ID_B$ (mm) | | Rapport R (= $ID_B$ /$ID_P$) | | Angle du chanfrein conique (*) | Classification |
|---|---|---|---|---|---|---|---|---|
| | Avant vissage | Après vissage | Avant vissage | Après vissage | Avant vissage | Après vissage | | |
| A1 | 220,09 | 219,56 | 213,89 | 214,08 | 0,972 | 0,975 | 35° | Présente Invention |
| A2 | | | | | | | 10° | Exemple comparatif |
| A3 | | 219,58 | 219,79 | 220,00 | 0,999 | B1,002 | | Art antérieur |
| B1 | 77,96 | 77,67 | 73,66 | 73,83 | 0,945 | 0,951 | 35° | Présente Invention |
| B2 | | | | | | | 10° | Exemple comparatif |
| B3 | | 77,68 | 77,66 | 77,84 | 0,996 | 1,002 | | Art antérieur |
| (*)(référence 29 figure 4) | | | | | | | | |

a) le tableau 4 présente les résultats d'essais de survissage jusqu'à plastification, les filetages, les portées d'étanchéité et les surfaces de butée étant enduits de graisse type API 5A2.

Tableau 4 : Résultats d'essais de survissage

| Echantillon No. | Essais de survissage | |
|---|---|---|
| | Couple $T_F$ à plastification (N.m) | Observation visuelle butée/épaulement |
| A1 | 96079 | Ni déformation plastique ni grippage |
| A2 | 71905 | déformation plastique de la butée femelle |
| A3 | 68317 | déformation plastique de la butée femelle et de l'extrémité mâle (point A) |
| B1 | 8414 | grippage sans déformation plastique de la butée femelle |
| B2 | 6100 | déformation plastique de la butée femelle |
| B3 | 4952 | déformation plastique de la butée femelle |

Les résultats de survissage se classent dans l'ordre décroissant suivant par rapport notamment aux critères couple $T_F$ et aspect visuel des butées et épaulements :

1°) butée femelle renforcée avec chanfrein conique d'angle 35° (essais A1, B1);
2°) butée femelle renforcée avec chanfrein conique d'angle 10° (essais A2, B2);

3°) butée femelle standard (essais A3, B3).

La valeur de $T_F$ est dans les cas A1 et B1 de 40 à 70% supérieure à celle sur joint fileté standard ; elle est de 5 à 23% supérieure à celle sur joint fileté standard dans les cas A2 et B2.

Les meilleurs résultats des joints filetés avec chanfrein conique à 35° par rapport à ceux avec chanfrein conique à 10° peuvent s'expliquer par la position relative des points C et D de la figure 4.

Dans le cas des joints filetés A1 et B1, le point D de la figure 4 se situe au-delà du point C par rapport au point B, donc dans une zone de diamètre constant et minimal $ID_B$ alors que ce n'est pas le cas des joints filetés A2 et B2: voir tableau 5:

Tableau 5 : position relative des points C et D.

| Echantillon | Angle de chanfrein | Distance axiale | | BC/BD | $ID_D/ID_P$ (*) | $ID_B/ID_P$ |
|---|---|---|---|---|---|---|
| | | BC (mm) | BD (mm) | | | |
| A1 | 35° | 4,4 | 12,8 | 0,4 | 0,972 | 0,972 |
| A2 | 10° | 17,6 | 11,8 | 1,5 | 0,981 | 0,972 |
| B1 | 35° | 3,1 | 5,9 | 0,5 | 0,945 | 0,945 |
| B2 | 10° | 12,2 | 4,6 | 2,7 | 0,979 | 0,945 |
| (*) $ID_D$ = diamètre intérieur au point D | | | | | | |

Dans le cas des essais A et B1, le point C se situe approximativement à mi-distance axiale entre les points B et D.

b) Essais de torsion sous pression intérieure.

Des joints filetés similaires des séries A et B ont été préalablement vissés sous le couple de vissage recommandé ($T_{opt}$) du tableau 2.

Ces joints filetés ont ensuite été soumis à une sollicitation combinée destinée à simuler une descente en rotation des tubes assemblés dans un puits en appliquant simultanément:

a) une pression intérieure de 43,7 MPa pour les échantillons A1 à A3 et de 56,0 MPa pour les échantillons B1 à B3, un tel niveau de pression entraînant une contrainte dans le corps des tubes égale à 80% de la limite d'élasticité minimale spécifiée (552 MPa selon tableau 2)et ;

b) un couple de torsion variable.

Le tableau 6 donne la valeur du couple $T_\ell$ à partir duquel les joints commencent à fuir.

Tableau 6 : résultats d'essais de torsion sous pression intérieure.

| Echantillon n° | Valeur du couple de fuite $T_\ell$ (N.m) |
|---|---|
| A1 | 93182 |
| A2 | 76068 |
| A3 | 71406 |
| B1 | 11807 |
| B2 | 8816 |
| B3 | 8149 |

On constate que le couple de torsion maximal avant fuite $T_\ell$ est un peu augmenté (moins de 10%) pour les butées renforcées à chanfrein à 10° (échantillons A2, B2) par rapport à la référence de l'état de la technique (échantillons A3, B3); il est par contre augmenté de 30 à 45% pour les butées renforcées avec chanfrein à 35° (échantillons A1, B1).

c) essais de cycles vissages-dévissages.

Un échantillon A1 a été soumis à 10 cycles successifs de vissage-dévissage sous un couple de vissage égal à 1,5 fois le couple de vissage recommandé du tableau 2. Aucun problème n'a été rencontré sur les enregistrements de couple de vissage-dévissage et les échantillons ne présentaient à l'observation visuelle aucune anomalie après ces 10 cycles de vissage-dévissage.

**Revendications**

1. Joint fileté tubulaire comprenant un élément fileté mâle (11) en extrémité d'un premier composant tubulaire (10) et un élément fileté femelle (21) en extrémité d'un second composant tubulaire (20), l'élément fileté mâle comportant un filetage mâle (12) et se terminant par une lèvre mâle (18) laquelle comprend premièrement une surface périphérique extérieure sur laquelle est réalisée une portée d'étanchéité mâle (13), deuxièmement une surface annulaire (16) de butée mâle (14), d'orientation sensiblement transversale, voisine et reliée à ladite portée d'étanchéité mâle et constituée par la surface frontale d'extrémité libre de l'élément fileté mâle, et troisièmement une surface périphérique intérieure (17), l'élément fileté femelle comprenant pour coopérer avec les moyens correspondants de l'élément fileté mâle un filetage femelle (22), une surface périphérique intérieure sur laquelle est réalisée une portée d'étanchéité femelle (23) et un épaulement femelle d'une part possédant une surface annulaire (26) de butée femelle d'orientation sensiblement transversale, voisine et reliée à ladite portée d'étanchéité femelle et d'autre part définissant une zone annulaire d'épaulement femelle (24) qui est soumise aux efforts axiaux de compression lorsque ladite surface de butée mâle (16) est en appui contre ladite surface de butée femelle (26), le filetage mâle étant vissé dans le filetage femelle jusqu'à ce que ladite surface de butée mâle porte contre ladite surface de butée femelle, ladite portée d'étanchéité mâle interférant alors radialement avec ladite portée d'étanchéité femelle, la zone annulaire d'épaulement femelle (24) possédant une surface périphérique intérieure (27) dont le diamètre intérieur est au moins localement à proximité de ladite surface de butée femelle (26) plus faible ($ID_B$) que le diamètre ($ID_P$) de la surface périphérique intérieure (17) de la lèvre mâle (18), **caractérisé en ce que** le rapport R de ces deux diamètres ($ID_B/ID_P$) est inférieur à 1 mais supérieur ou égal à 0,9.

2. Joint fileté tubulaire selon la revendication 1, **caractérisé en ce que** le rapport R obéit à la relation

$$\sqrt{1{,}7 - 0{,}7S^2} \leq R \leq \sqrt{1{,}2 - 0{,}2S^2} \, ,$$

dans laquelle S est égal au rapport entre diamètre ($OD_A$) du bord extérieur de ladite surface de butée mâle (16) et diamètre intérieur ($ID_P$) de la lèvre mâle (18).

3. Joint fileté tubulaire selon la revendication 2, **caractérisé en ce que** le rapport R est sensiblement égal à

$$\sqrt{1{,}3 - 0{,}3S^2} \, .$$

4. Joint fileté tubulaire selon l'une quelconque des revendications 1 à 3, **caractérisé en ce que** la surface périphérique intérieure (27) de l'épaulement femelle possède un diamètre minimal ($ID_B$) en un point (D) où cette surface périphérique intérieure (27) intercepte une surface conique de cisaillement maximal (32) coaxiale à l'élément fileté femelle, de demi-angle au sommet 45°, dont le diamètre va en diminuant dans la zone d'épaulement femelle (24) au fur et à mesure que l'on s'éloigne de ladite surface de butée femelle (26) et qui passe par le bord extérieur (A) de ladite surface de butée femelle (26).

5. Joint fileté tubulaire selon l'une quelconque des revendications 1 à 4, **caractérisé en ce que** le diamètre de la surface périphérique intérieure (27) de l'épaulement femelle à son extrémité (B) du côté de ladite surface de butée femelle (26) est sensiblement égal au diamètre intérieur ($ID_P$) de la surface périphérique intérieure (17) de la lèvre mâle (18).

6. Joint fileté tubulaire selon la revendication 5, **caractérisé en ce que** la surface périphérique intérieure (27) de l'épaulement femelle présente une première partie dite de transition (29, 39) dont le diamètre intérieur diminue progressivement depuis ladite surface de butée femelle (26) puis une seconde partie (30), cylindrique de diamètre intérieur minimal ($ID_B$).

7. Joint fileté tubulaire selon les revendications 4 et 6 prises conjointement, **caractérisé en ce que** les parties de transition (29, 39) et cylindrique (30) de la surface périphérique intérieure (27) de l'épaulement femelle se raccordent en un point (C) dit de raccord qui est situé sensiblement à mi-distance axiale entre l'extrémité (B) de ladite partie de transition du côté de ladite surface de butée femelle (26) et le point d'intersection (D) de la surface périphérique intérieure (27) de l'épaulement femelle avec la surface conique de cisaillement maximal (32).

8. Joint fileté tubulaire selon la revendication 6 ou 7, **caractérisé en ce que** ladite partie de transition de la surface périphérique intérieure (27) de l'épaulement femelle comprend une surface conique (29) coaxiale à l'élément fileté femelle, de demi-angle au sommet compris entre 15° et 45°.

9.  Joint fileté tubulaire selon la revendication 6 ou 7, **caractérisé en ce que** ladite partie de transition de la surface périphérique intérieure (27) de l'épaulement femelle comprend une surface conique (29) coaxiale à l'élément fileté femelle, de demi-angle au sommet compris entre 30° et 45°.

10. Joint fileté tubulaire selon la revendication 6 ou 7, **caractérisé en ce que** ladite partie de transition de la surface périphérique intérieure (27) de l'épaulement femelle comprend au moins une surface torique (39) coaxiale à l'élément fileté femelle.

11. Joint fileté tubulaire selon la revendication 10, **caractérisé en ce que** ladite partie de transition de la surface périphérique intérieure (27) de l'épaulement femelle comprend une surface torique (39) dont la tangente à son extrémité du côté de ladite surface de butée femelle (26) fait un angle compris entre 15° et 45° avec l'axe (XX) du joint fileté.

12. Joint fileté tubulaire selon la revendication 10 ou 11, **caractérisé en ce que** ladite partie de transition de la surface périphérique intérieure (27) de l'épaulement femelle comprend une surface torique (39) tangente en son extrémité opposée à ladite surface de butée femelle (26) à la partie cylindrique (30) de la surface périphérique intérieure (27) de l'épaulement femelle.

13. Joint fileté tubulaire selon l'une quelconque des revendications 1 à 12, **caractérisé en ce que** lesdites surfaces de butée mâle et femelle (16, 26) forment des butées inverses d'angle négatif dont la mesure par rapport à l'axe (XX) des éléments filetés est inférieure ou égale à 20°.

**Claims**

1.  A tubular threaded connection comprising a threaded male element (11) at the end of a first tubular component (10) and a female threaded element (21) at the end of a second tubular component (20), the threaded male element being provided with a male threading (12) and ending in a male lip (18) which comprises firstly an external peripheral surface on which a male sealing surface (13) is formed, secondly a male annular abutting surface (16,14), oriented substantially transversely, located near and connected to said male sealing surface and constituted by the front surface of the free end of the male threaded element, and thirdly an internal peripheral surface (17), the female threaded element comprising, so as to co-operate with the corresponding means of the male threaded element, a female threading (22), an internal peripheral surface on which a female sealing surface (23) is formed, and a female shoulder having on the one hand a female annular abutting surface (26) oriented substantially transversely, located near and connected to said female sealing surface, and on the other hand defining a female annular shoulder zone (24) which is subjected to axial compressive loads when said male abutting surface (16) bears against said female abutting surface (26), the male threading being screwed into the female threading until said male abutting surface bears against said female abutting surface, said male sealing surface then radially interfering with said female sealing surface, the female annular shoulder zone (24) comprising an internal peripheral surface (27), the internal diameter of which at least in close proximity to said female abutting surface (26) is smaller ($ID_B$) than the diameter ($ID_p$) of the internal peripheral surface (17) of the male lip (18), **characterized in that** the ratio R of these two diameters ($ID_B$-$ID_P$) is less than 1 but more than or equal to 0.9.

2.  A tubular threaded connection according to claim 1, **characterized in that** the ratio R satisfies the following relationship :

$$\sqrt{1.7 - 0.7S^2} \le R \le \sqrt{1.2 - 0.2S^2},$$

in which S is equal to the ratio between the diameter ($OD_A$) of the external edge of said male abutting surface (16) and the internal diameter ($ID_P$) of the male lip (18).

3.  A tubular threaded connection according to claim 2, **characterized in that** the ratio R is substantially equal to

$$\sqrt{1.3 - 0.3S^2}.$$

**4.** A tubular threaded connection according to any of claims 1 to 3, **characterized in that** the internal peripheral surface (27) of the female shoulder has a minimum diameter ($ID_B$) at a point (D) where said internal peripheral surface (27) intercepts a tapered surface of maximum shearing (32), coaxial with the female threaded element, having a vertex half-angle of 45°, wherein the diameter in the female shoulder zone (24) decreases as the distance increases from said female abutting surface (26) and passes through the external edge (A) of said female abutting surface (26).

**5.** A tubular threaded connection according to any of claims 1 to 4, **characterized in that** the diameter of the internal peripheral surface (27) of the female shoulder at its end (B) on the side of said female abutting surface (26) is substantially equal to the internal diameter ($ID_P$) of the internal peripheral surface (17) of the male lip (18).

**6.** A tubular threaded connection according to claim 5, **characterized in that** the internal peripheral surface (27) of the female shoulder comprises a first portion termed the transition portion (29, 39) the internal diameter of which gradually decreases from said female abutting surface (26), and a second cylindrical portion (30) with a minimum internal diameter ($ID_B$).

**7.** A tubular threaded connection according to claims 4 and 6 taken together, **characterized in that** the transition portions (29, 39) and the cylindrical portion (30) of the internal peripheral surface (27) of the female shoulder join at a point (C) termed the junction point which is located substantially half-way axially between the end (B) of said transition portion on the side of the female abutting surface (26) and the point of intersection (D) of the internal peripheral surface (27) of the female shoulder with the tapered surface of maximum shearing (32).

**8.** A tubular threaded connection according to claim 6 or 7, **characterized in that** said transition portion of the internal peripheral surface (27) of the female shoulder comprises a tapered surface (29) which is coaxial with the female threaded element and has a vertex half-angle in the range 15° to 45°.

**9.** A tubular threaded connection according to claim 6 or 7, **characterized in that** said transition portion of the internal peripheral surface (27) of the female shoulder comprises a tapered surface (29) which is coaxial with the female threaded element and has a vertex half-angle in the range 30° to 45°.

**10.** A tubular threaded connection according to claim 6 or 7, **characterized in that** said transition portion of the internal peripheral surface (27) of the female shoulder comprises at least one toric surface (39) which is coaxial with the female threaded element.

**11.** A tubular threaded connection according to claim 10, **characterized in that** said transition portion of the internal peripheral surface (27) of the female shoulder comprises a toric surface (39), wherein the tangent at its end on the side of said female abutting surface (26) forms an angle in the range 15° to 45° with the axis (XX) of the threaded connection.

**12.** A tubular threaded connection according to claim 10 or 11, **characterized in that** said transition portion of the internal peripheral surface (27) of the female shoulder comprises a toric surface (39) which is tangential at its end opposite said female abutting surface (26) to the cylindrical portion (30) of the internal peripheral surface (27) of the female shoulder.

**13.** A tubular threaded connection according to any of claims 1 to 12, **characterized in that** said female and male abutting surfaces (16, 26) form reverse abutting surfaces with a negative angle with respect to the axis (XX) of the threaded elements the dimension of which is 20° or less.

**Patentansprüche**

**1.** Rohrgewindeverbindung mit einem Einsteck-Gewindeelement (11) am Ende eines ersten rohrförmigen Bauteils (10) und mit einem Aufnahme-Gewindeelement (21) am Ende eines zweiten rohrförmigen Bauteils (20), wobei das Einsteck-Gewindeelement ein Außengewinde (12) aufweist und in einer Außenlippe (18) endet, die erstens eine Außenumfangsfläche, auf der ein Einsteck-Dichtungsauflager (13) ausgebildet ist, zweitens eine Ringfläche (16) eines Einsteckanschlags (14) mit im Wesentlichen Querausrichtung, die dem Einsteck-Dichtungsauflager benachbart und mit ihr verbunden ist und aus der Stirnfläche des freien Endes des Einsteck-Gewindeelements besteht, und drittens eine Innenumfangsfläche (17) aufweist, wobei das Aufnahme-Gewindeelement zum Zusammenwirken mit den entsprechenden Mitteln des Einsteck-Gewindeelements ein Innengewinde (22), eine Innenumfangsfläche, auf der ein Aufnahme-Dichtungsauflager (23) ausgebildet ist, und eine Aufnahmeschulter aufweist, die einerseits eine Aufnahmeanschlag-Ringfläche (26) mit im Wesentlichen Querausrichtung besitzt, die dem Aufnahme-Dichtungsauflager benachbart und mit ihm verbunden ist, und andererseits eine Aufnahmeschulter-Ringzone (24) definiert, die den axialen Druckkräften ausgesetzt ist, wenn die Einsteckanschlagfläche (16) gegen die Aufnahmeanschlagfläche (26) anliegt, wobei das Außengewinde in das Innengewinde geschraubt wird, bis die Einsteckanschlagfläche gegen die Aufnahmeanschlagfläche aufschlägt, wobei das Einsteck-Dichtungsauflager dann radial mit dem Aufnahme-Dichtungsauflager interferiert, wobei die Aufnahmeschulter-Ringzone (24) eine Innenumfangsfläche (27) besitzt, deren Innendurchmesser mindestens lokal in der Nähe der Aufnahmeanschlagfläche (26) geringer ($ID_B$) ist als der Durchmesser ($ID_P$) der Innenumfangsfläche (17) der Außenlippe (18), **dadurch gekennzeichnet, dass** das Verhältnis R dieser zwei Durchmesser ($ID_B/ID_P$) geringer als 1, aber höher als oder gleich 0,9 ist.

2.  Rohrgewindeverbindung nach Anspruch 1, **dadurch gekennzeichnet, dass** das Verhältnis R der Beziehung

$$\sqrt{1{,}7 - 0{,}7S^2} \ \leq \ R \ \leq \ \sqrt{1{,}2 - 0{,}2S^2}$$

gehorcht, bei der S gleich dem Verhältnis zwischen dem Durchmesser ($OD_A$) des Außenrands der Einsteckanschlagfläche (16) und dem Innendurchmesser ($ID_P$) der Außenlippe (18) ist.

3.  Rohrgewindeverbindung nach Anspruch 2, **dadurch gekennzeichnet, dass** das Verhältnis R im Wesentlichen gleich $\sqrt{1{,}3 - 0{,}3S^2}$ ist.

4.  Rohrgewindeverbindung nach einem der Ansprüche 1 bis 3, **dadurch gekennzeichnet, dass** die Innenumfangsfläche (27) der Aufnahmeschulter einen minimalen Durchmesser ($ID_B$) an einem Punkt (D) aufweist, an dem diese Innenumfangsfläche (27) eine Kegelfläche maximalen Scherens (32) koaxial zum Aufnahme-Gewindeelement mit einem halben Kegelwinkel von 45° schneidet, deren Durchmesser in der Aufnahmeschulterzone (24) abnimmt, je weiter man sich von der Aufnahmeanschlagfläche (26) entfernt, und die über den Außenrand (A) der Aufnahmeanschlagfläche (26) geht.

5.  Rohrgewindeverbindung nach einem der Ansprüche 1 bis 4, **dadurch gekennzeichnet, dass** der Durchmesser der Innenumfangsfläche (27) der Aufnahmeschulter an ihrem Ende (B) auf der Seite der Aufnahmeanschlagfläche (26) im Wesentlichen gleich dem Innendurchmesser ($ID_P$) der Innenumfangsfläche (17) der Außenlippe (18) ist.

6.  Rohrgewindeverbindung nach Anspruch 5, **dadurch gekennzeichnet, dass** die Innenumfangsfläche (27) der Aufnahmeschulter einen ersten so genannten Übergangsbereich (29, 39), dessen Innendurchmesser ausgehend von der Aufnahmeanschlagfläche (26) progressiv abnimmt, und dann einen zweiten, zylindrischen Bereich (30) mit einem minimalen Innendurchmesser ($ID_B$) aufweist.

7.  Rohrgewindeverbindung nach den Ansprüchen 4 und 6 zusammen genommen, **dadurch gekennzeichnet, dass** die Übergangsbereiche (29, 39) und der zylindrische Bereich (30) der Innenumfangsfläche (27) der Aufnahmeschulter sich an einem Verbindungspunkt genannten Punkt (C) verbinden, der sich im Wesentlichen auf halber axialer Strecke zwischen dem Ende (B) des Übergangsbereichs auf der Seite der Aufnahmeanschlagfläche (26) und dem Schnittpunkt (D) der Innenumfangsfläche (27) der Aufnahmeschulter mit der Kegelfläche maximalen Scherens (32) befindet.

8.  Rohrgewindeverbindung nach Anspruch 6 oder 7, **dadurch gekennzeichnet, dass** der Übergangsbereich der Innenumfangsfläche (27) der Aufnahmeschulter eine Kegelfläche (29) koaxial zum Aufnahme-Gewindeelement aufweist, deren halber Kegelwinkel zwischen 15° und 45° liegt.

9.  Rohrgewindeverbindung nach Anspruch 6 oder 7, **dadurch gekennzeichnet, dass** der Übergangsbereich der Innenumfangsfläche (27) der Aufnahmeschulter eine Kegelfläche (29) koaxial zum Aufnahme-Gewindeelement aufweist, deren halber Kegelwinkel zwischen 30° und 45° liegt.

10. Rohrgewindeverbindung nach Anspruch 6 oder 7, **dadurch gekennzeichnet, dass** der Übergangsbereich der Innenumfangsfläche (27) der Aufnahmeschulter mindestens eine Torusfläche (39) koaxial zum Aufnahme-Gewindeelement aufweist.

11. Rohrgewindeverbindung nach Anspruch 10, **dadurch gekennzeichnet, dass** der Übergangsbereich der Innenumfangsfläche (27) der Aufnahmeschulter eine Torusfläche (39) aufweist, deren Tangente an ihrem Ende auf der Seite der Aufnahmeanschlagfläche (26) einen Winkel zwischen 15° und 45° mit der Achse (XX) der Gewindeverbindung bildet.

12. Rohrgewindeverbindung nach Anspruch 10 oder 11, **dadurch gekennzeichnet, dass** der Übergangsbereich der Innenumfangsfläche (27) der Aufnahmeschulter eine Torusfläche (39) aufweist, die an ihrem der Aufnahmeanschlagfläche (26) entgegengesetzten Ende den zylindrischen Bereich (30) der Innenumfangsfläche (27) der Aufnahmeschulter tangiert.

13. Rohrgewindeverbindung nach einem der Ansprüche 1 bis 12, **dadurch gekennzeichnet, dass** die Einsteck- und Aufnahmeanschlagflächen (16, 26) umgekehrte Anschläge mit negativem Winkel bilden, deren Maß bezüglich der Achse (XX) der Gewindeelemente geringer als oder gleich 20° ist.

Fig.1

Fig.2

22    21

23    26    24

A

12 11 13 18 14 16    $ID_P$    17    29    32    30    $ID_B$  $OD_A$

B
C    D

27

## Fig.3

23    26    24    32

13

18

A

14

16

B

17    $ID_P$    30°C    $ID_B$    $OD_A$

29    30    27

## Fig.4

23  26  24  32

13

18

14

16

A

B

30°

39

27

C

D

ID_P

ID_B

30

OD_A

17

**Fig.5**

T

T_F ............................................ F

T_opt ...........................................

T_E ............................................ E

N

**Fig.6**